# EUROPÄISCHE PATENTANMELDUNG

(11) **EP 2 371 699 A1**
(43) Veröffentlichungstag der Anmeldung: **05.10.2011**
(21) Anmeldenummer: 11002631.7
(22) Anmeldetag: 30.03.2011
(51) Int. Cl.: B62M 6/90, B62J 1/08, B62K 19/02, B62K 19/40

(54) **Vorrichtung zur Unterbringung eines Stromspeichers**

(30) Priorität: 30.03.2010 DE 202010004379 U
(71) Anmelder: Pending System GmbH & Co. KG, 95679 Waldershof (DE)
(72) Erfinder: Schenkl, Bernd, 95679 Waldershof (DE); Dauth, Gregor, 95615 Marktredwitz (DE)
(74) Vertreter: Herden, Andreas F.

(57) **Zusammenfassung**

Vorrichtung zur Unterbringung eines Stromspeichers (6) im oder am Rahmen des Fahrrades, bei welcher der Stromspeicher (6) in der Sattelstütze (1) eines Fahrrads, insbesondere eines Renn-, Mountain-, Trekking-, City- oder eines Tourenbikes untergebracht ist, wobei der Querschnitte der Sattelstütze (1), in etwa senkrecht zur Längsertreckung der Sattelstütze (1) verlaufend nicht kreisförmig ist.

## Beschreibung

Die Erfindung betrifft eine Vorrichtung zur Unterbringung eines Speichers für elektrische Energie, insbesondere eines elektrischen Stromspeichers oder Akkumulators in der Sattelstütze eines Fahrrads, insbesondere eines Renn-, Mountain-, Trekking-, City- oder Tourenbikes.

Es ist bekannt, dass bei Fahrrädern elektrische oder elektronische Komponenten, zum Beispiel für Beleuchtungszwecke, als Fahrerinformationen (Tachometer,-Navigationsgeräte etc.) oder als Hilfsantriebe Verwendung finden. Allen diesen Geräten ist gemein, dass sie zum Betrieb in der Regel Strom benötigen. Dieser kann auf unterschiedliche Weise erzeugt werden. Eine Möglichkeit ist die Verwendung von elektro- oder magnetdynamischer Verfahren, beispielsweise mittels eines Dynamos. Dieses Verfahren ist aber nur für Geräte mit geringem Strombedarf akzeptabel, da die Energie zum Betrieb derartiger Geräte vom Fahrer selbst zur Verfügung gestellt werden muss. Eine Lösung dieses Problems, wäre durch den Einsatz von Solarzellen oder kompakten Wasserstoffspeichern in Kombination mir Brennstoffzellen gegeben. Beide verursachen allerdings hohe Gewichtszunahmen, beeinträchtigen das Aussehen des Fahrrads optisch negativ, sind voluminös und in der Regel nicht einfach ab- bzw. ausbaubar. Auch verursachen diese Lösungen hohe Kosten und liefern in der Regel nicht die gewünschte Speicherkapazität.

Eine bessere Lösung stellt die Verwendung eines elektrochemischen Stromspeichers dar (im Folgenden wird immer dann, wenn von einem elektrochemischen Akkumulator die Rede ist, davon ausgegangen, dass es sich um einen Akkumulator oder eine Batterie handelt. Ebenso wird vorausgesetzt, dass dieser Akkumulator oder diese Batterie aus einem oder mehreren Einzelelementen besteht, die zusätzlich in Reihenschaltung, in Parallelschaltung oder in einer beliebigen Kombination davon betrieben werden. Typische Akkumulatoren sind Lithium-Ionen, Lithium-Polymer oder um andere bekannte wieder aufladbare Stromspeicher, typische Batterien sind Alkali-Mangan oder andere bekannte Einwegbatterien).

Obwohl in den letzten Jahren, im Bereich der Akkumulatoren sehr große Fortschritte erzielt worden sind, sind deren Abmessungen immer noch verhältnismäßig groß, sofern hohe Speicherkapazitäten erwünscht sind. Einer dieser stromhungrigen Anwendungen ist, wie schon zuvor erwähnt, in Form von Hilfsantrieben gegeben, ein anderer durch graphische Anzeigen, beispielsweise von GPS-Empfängern oder Routenplanern aufgrund der notwendigen Hintergrundbeleuchtung.

Verstärkt wird die Forderung nach großer Speicherkapazität noch durch die Tatsache, dass erwähnter Hilfsmotor oder die Grafikanzeigen auch über einen längeren Zeitraum ohne Zwischenaufladung betrieben werden sollen. Speziell auf längeren Fahrradtouren besteht unter Umständen auch keine Möglichkeit, den Stromspeicher zwischendurch aufzuladen.

Aufgrund der begrenzten Speicherkapazität heutiger Stromspeicher, besteht aber keine Möglichkeit diesen Stromspeicher diskret am Fahrrad anzubringen, ohne das optische Aussehen des Fahrrads negativ zu beeinträchtigen. Auch lässt das Vorhandensein eines voluminösen Stromspeichers unter Unständen auf einen Hilfsmotor schließen. Dieser Umstand behinderte bislang den großflächigen Einsatz bzw. die Akzeptanz eines Hilfsantriebes. Es ist zu erwarten, dass speziell im Falle des Hilfsantriebes deutliche Zuwachszahlen in den verkauften Einheiten zu verzeichnen wären, sofern dessen Verwendung nicht direkt sichtbar ist.

Auch in Bezug auf die Beleuchtungseinrichtungen eines Fahrrads, können Stromspeicher hoher Speicherkapazität sinnvoll genutzt werden. Obwohl in den letzten Jahren, durch die rasante Entwicklung im Bereich Licht emittierender Dioden (LED) deren Strombedarf deutlich gesunken ist und kompakte Stromspeicher verwendet werden könnten, können die erwähnten hochkapazitativen Stromspeicher genutzt werden, um die Sicherheit im Straßenverkehr durch Einsatz mehrerer oder hellerer Lichtquellen beträchtlich zu erhöhen. Innovative Leuchtkonzepte mit größerem Lichtkegel werden so möglich.

Wünschenswert wäre demnach eine Vorrichtung, ein Stromspeicher mit sehr hoher Speicherkapazität derart am Fahrrad unterzubringen, dass dessen optisches Aussehen nicht beeinträchtig wird. Eine erstaunlich einfache Möglichkeit besteht darin, den Stromspeicher an einer Position innerhalb des Rahmens unterzubringen, beispielsweise in der Sattelstütze. Die Unterbringung innerhalb des Rahmens ist dabei nicht neu.

In DE 040 13 091 A1 wird ein Verfahren zur Unterbringung von Akkumulatoren im Lenker beschrieben. Obwohl das Stromspeichernde Element nah an etwaigen Verbrauchern (z.B. die Vorderbeleuchtung oder an einem externen Vorderradantrieb) angebracht ist, verlagert der Stromspeicher den Schwerpunkt des Fahrrades ungünstig. Auch eine Erwärmung des Stromspeichers und damit des Lenkers, aufgrund großer Stromentnahme, beispielsweise wenn der Hilfsantrieb bei Bergfahrten aktiviert wird, könnte unangenehme Folgen nach sich ziehen.

In DE 039 21 782 A1 wird ein Verfahren zur Unterbringung von Akkumulatoren in einem Rahmenrohr beschrieben. Auch hier ist der Schwerpunkt nicht optimal verteilt. Zusätzlich kann der Stromspeicher nur schwer oder gar nicht gewechselt bzw. ausgetauscht werden.

In DE 197 53 047 A1 wird ein Verfahren zur Unterbringung von Akkumulatoren im Sitzrohr beschrieben. Allerdings wird in DE 197 53 047 A1 der Stromspeicher nach unten entnommen. Das zieht eine umständliche Prozedur zum entfernen des Stromspeichers nach sich, da dass Rad zum wechseln des Stromspeichers angehoben werden muss. Gleichzeitig muss der Akku entfernt werden, was von einer Person allein nur umständlich zu bewerkstelligen ist. Darüber hinaus besteht die Gefahr, dass der Stromspeicher von großer Höhe auf den Boden fällt und Schaden nimmt. Speziell die erhöhte Explosionsgefahr von Lithium-Ionen Stromspeichern würde hier Akzeptanzprobleme nach sich ziehen. Für andere Rahmengeometrien, kann die Entfernungsprozedur noch umständlicher ausfallen, beispielsweise wenn das entsprechende Rahmenrohr vertikal angeordnet ist.

In WO 2008 106976 A1 wird ein Verfahren zur Unterbringung von Akkumulatoren innerhalb des Rahmens beschrieben, dabei wird allerdings der Rahmen mit einer Nut versehen und der Stromspeicher in dieser Nut eingebracht. Obwohl in der Patentschrift eine ausreichende Stabilität des Rahmens vorausgesetzt wird, beeinträchtigt diese Nut das Erscheinungsbild des Fahrrads beträchtlich, sofern der Stromspeicher nicht eingesetzt ist.

Der Erfindung liegt daher die Aufgabe zu Grunde, einen Stromspeicher innerhalb des Rahmes eines Fahrrads derart unterzubringen, dass weder eine strukturelle Schwächung noch eine optische Beeinträchtigung des Fahrrades erfolgt, gleichzeitig aber hohe Speicherkapazitäten zur Verfügung stehen. Zusätzlich soll der Stromspeicher einfach entnehmbar und wieder anbringbar sein.

Die Lösung der Aufgabe erfolgt durch den Gegenstand des Anspruchs 1, nämlich dadurch, dass
der Stromspeicher innerhalb der Sattelstütze angebracht wird.

Vorteilhafte Ausgestaltungen und Weiterbildungen der Erfindung sind in den Unteransprüchen angegeben.

Durch die erfindungsgemäße Vorrichtung zur Unterbringung eines Stromspeicher in der Sattelstütze eines Fahrrades wird erreicht, dass ein Stromspeicher hoher Kapazität mitgeführt werden kann und somit ein längerer Betrieb von Verbraucher als bisher möglich ist, ohne das optische Aussehen des Fahrrads zu beeinträchtigen, insbesondere wenn der Querschnitt der Sattelstütze, in etwa senkrecht zur Längserstreckung der Sattelstütze verlaufend und vorzugsweise ein dieser zugeordneter Abschnitt des Rahmens, in welchen die Sattelstütze einschiebbar ist, nicht kreisförmig ausgebildet ist. Hierdurch .können äußerst vorteilhaft Akkumulatoren in der Sattelstütze beherbergt werden, die keine kreisförmige Form aufweisen oder zumindest einen anderen Außendurchmesser aufweisen als den Innendurchmesser der Sattelstütze.

Es ist weiterhin vorgesehen, dass die Längsachse des Stromspeichers quer, schräg oder längs oder beides zur Sattelstütze angeordnet ist.

In einer besonders vorteilhaften.Ausführungsform der Erfindung besteht der Stromspeicher aus einem Lithium-Ionen oder einem Lithium-Polymer Typ.

In einer weiteren vorteilhaften Ausführungsform ist vorgesehen, dass die einzelnen Elemente des Stromspeichers parallel bzw. seriell verschaltet oder beides sind, so dass Strom- bzw. Spannungswert flexibel an den jeweiligen Verbraucher angepasst werden können.

Es ist besonders vorteilhaft, wenn die Entnahme des Stromspeichers nach oben erfolgt, da so kein Umdrehen des Fahrrades notwendig ist.

Damit der Ladezustand des Stromspeichers jederzeit bekannt ist, ist in einer vorteilhaften Weiterbildung vorgesehen, den Ladezustand des Stromspeichers visuell anzuzeigen, beispielsweise mittels einer LED-Reihe.

Damit die Funktion des Stromspeichers nicht beeinträchtigt wird, ist es vorteilhaft, den Stromspeicher gegen Umwelteinflüsse zu schützen. Dies kann beispielsweise mittels einer aufgebrachten Schutzschicht erfolgen.

Es ist besonders vorteilhaft, wenn eine Vorrichtung vorgesehen ist, mit dem Strom bzw. Spannung des Stromspeichers abgegriffen werden können, beispielsweise zum Betrieb eines externen Gerätes wie einer Lampe oder zum aufladen eines Mobiltelefons.

In einer besonders bevorzugten Ausführungsform ist der Energiespeicher eingerichtet, den Antrieb eines Hilfsmotors, beispielsweise eines Elektromotors, zu ermöglichen, um beispielsweise bei steilen Passagen weniger Energie zum Antrieb des Fahrrades zu benötigen.

Zweckmäßigerweise sind die einzelnen Stromspeicherriegel versetzt angeordnet, um den Füllgrad des Holraums zu erhöhen. Dabei kommen die Elemente einer ersten Reihe von Elementen eines Stromspeicher in dem Zwischenraum zwischen den Elementen einer zweiten Reihe des Stromspeichers zum liegen.

Eine besonders vorteilhafte Ausführung der Erfindung ist mit einer Vorrichtung gegeben, mit der der Stromspeicher ohne Entnahme aus der Sattelstütze aufgeladen werden kann. Insbesondere kann das Aufladen auch während eines Bremsvorgangs oder einer abschüssigen Passage mittels des Antriebsmotors geschehen (Rekuperation).

Die Erfindung wird nachfolgend anhand von Ausführungsbeispielen und unter Bezugnahme auf die beigefügten Zeichnungen näher erläutert. Dabei bezeichnen gleiche Bezugszeichen in verschiedene Figuren auf gleiche oder entsprechende Elemente.
Es zeigen:
- Fig. 1: Eine Seitenansicht des Fahrrads in einer Detailansicht.
- Fig. 2A: Eine aufgeschnittene Seitenansicht der Sattelstütze, in der die Elemente des Stromspeichers längs zur Sattelstütze angeordnet sind.
- Fig. 2B: Eine aufgeschnittene Seitenansicht der Sattelstütze, in der die Elemente des Stromspeichers quer zur Sattelstütze angeordnet sind.
- Fig. 3A: Eine aufgeschnittene Isometrische Ansicht der Sattelstütze, in der die Elemente des Stromspeichers längs zur Sattelstütze angeordnet sind.
- Fig. 3B: Eine aufgeschnittene Isometrische Ansicht der Sattelstütze in der die Elemente des Stromspeichers quer zur Sattelstütze angeordnet sind.

### Detaillierte Beschreibung bevorzugter Ausführungsformen

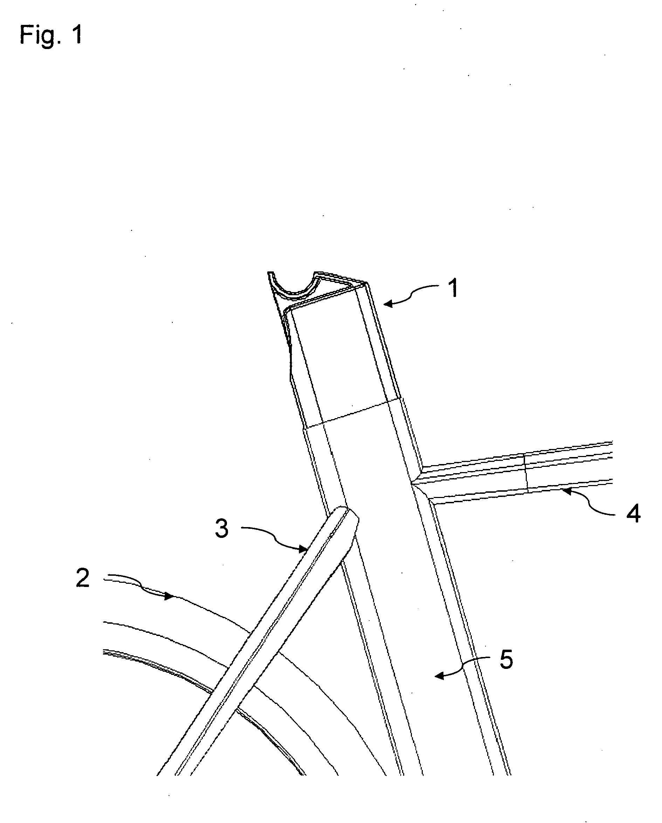

Fig. 1A zeigt eine Detailansicht des Fahrrads mit dem Sattelstütze (1) als zentrales Element, dem Reifen (2), den Sitzstreben (3) und dem Oberrohr (4). Wenn es sich um ein Damenfahrrad handelt, fehlt in der Regel das Oberrohr (4). Innerhalb der Sattelstütze (1) ist ein Holraum (5) vorgesehen, der zur Aufnahme des Stromspeichers dient. Nach Figur 1A ist der Sattel fest mit der den Stromspeicher aufnehmenden Sattelstütze verbunden und weist somit einen konstanten Abstand zu dem Stromspeicher auf. Die Sattelstütze wird in den entsprechenden Abschnitt des Rahmens, vorzugsweise zusammen mit dem daran montierten Sattel, eingeschoben.

Hierdurch kann beispielsweise ein vorjustierter Abstand des Sattels zum restlichen Rahmen einfach wieder hergestellt werden, indem entsprechende Markierungen am Äußeren des Stomspeichers angebracht oder verwendet werden.

Derartige Markierungen können beispielsweise gleichlange Abschnitte, wie auf einer Meterskala und/oder auch definierte Endanschläge für einen maximalen und minimalen Auszug umfassen.

Hierdurch kann auch die Nutzung durch mehrere Benutzter einfach erfolgen, indem jeder Benutzer seinen eigenen Stromspeicher mit eigenem Sattel und eigenen Markierungen für die justierte Montage verwendet.
Statt oder zusätzlich zu den Markierungen können auch Anschläge am Äußeren des Stromspeichers angebracht sein, mittels welcher der Stromspeicher nur bist zu dem Anschlag einschiebbar ist. Derartige Anschläge können die Form einer Hülse haben, welche den Stromspeicher längsverschiebbar umgibt. Bei justiertem Sattelauszug kann dann die Hülse nach unten bis zum Anschlag verschoben und geeignet in dieser justierten Position in deren Stellung festgelegt werden. Das festlegen der Hülse kann mittels geeigneter Mittel, wie Verklebung, Verschraubung oder Klemmung mittels Klemmschelle an der Hülse vorgenommen werden:

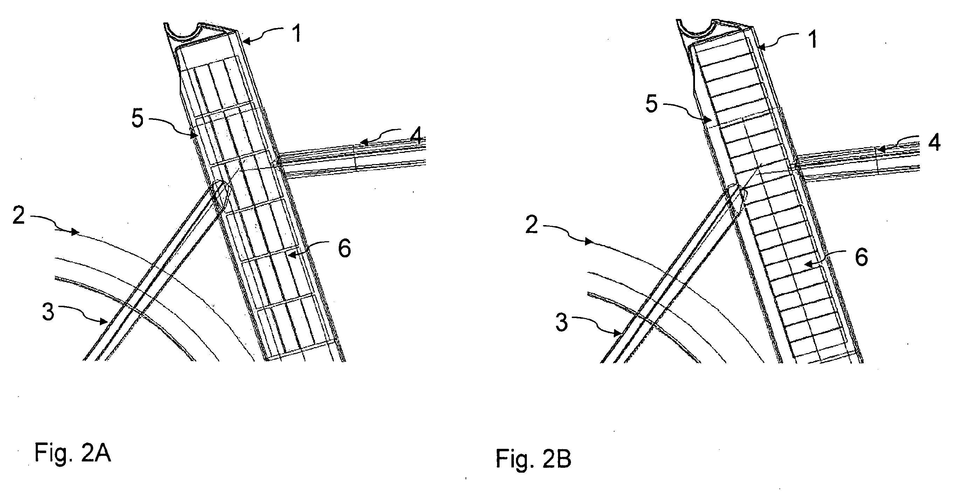

Fig. 2A zeigt eine aufgeschnittene Seitenansicht der Sattelstütze (1), in der der Holraum (5) mit einem Stromspeicher (6) gefüllt ist. Die einzelnen Elemente des Stromspeichers sind dabei längs zur Sattelstütze (1) eingebaut.

Fig. 2B zeigt ebenfalls eine aufgeschnittene Seitenansicht der erfindungsgemäßen Sattelstütze (1). Einziger Unterschied zur Fig. 2A liegt darin, dass die Einbauorientierung des Stromspeichers (6) unterschiedlich ist. In Fig. 2B ist dieser quer zur Sattelstütze (1) gelagert.

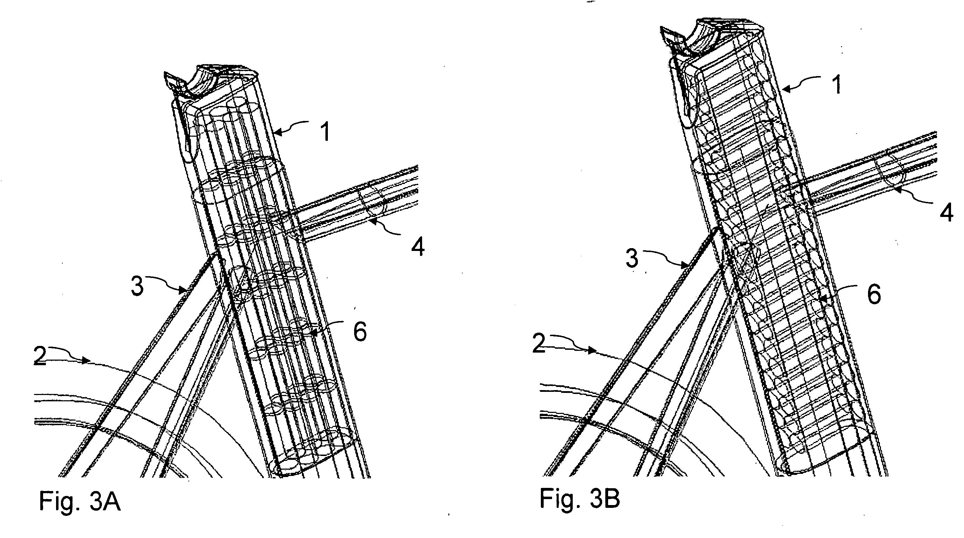

Fig. 3A zeigt eine aufgeschnittene isometrische Ansicht der Sattelstütze (1), in der der Stromspeicher (6) quer zur Sattelstütze (1) gelagert ist. In Fig. 3A sind zwei Stromspeicherreihen, die hintereinander angeordnet sind, gezeigt.

Fig. 3B zeigt eine aufgeschnittene isometrische Ansicht der Sattelstütze (1), in der die Stromspeicher (6) längs zur Sattelstütze (1) gelagert sind. In Fig. 3B sind zwei Stromspeicherreihen, die hintereinander angeordnet sind, gezeigt.

Aus der perspektivischen Darstellung der Figuren 3A und 3B ist ebenfalls gut zu erkennen, dass der Querschnitt der Sattelstütze, in etwa senkrecht zur Längserstreckung der Sattelstütze verlaufend und vorzugsweise ein dieser zugeordneter Abschnitt des Rahmens, in welchen die Sattelstütze einschiebbar ist, zumindest abschnittsweise rechteckförmig mit vorzugsweise zusätzlichen in Fahrtrichtung des Fahrrads und gegen Fahrtrichtung des Fahrrads verlaufenden Verjüngungen ausgebildet ist

Ferner ist der zugeordnete Abschnitt des Rahmens, in welchen die Sattelstütze einschiebbar ist, im wesentlichen über dessen gesamte Länge nicht rechteckförmig ausgebildet oder dessen Querschnittsform ändert sich nicht entlang der Längserstreckung.

Bei einer erfindungsgemäßen Sattelstütze für ein Fahrrad, insbesondere ein Renn-, Mountain-, Trekking-, City- oder Tourenbike, ist in gleicher Weise ein Stromspeicher in der Sattelstütze des Fahrrads untergebracht oder unterbringbar und ist insbesondere der Querschnitt der Sattelstütze, in etwa senkrecht zur Längserstreckung der Sattelstütze verlaufend nicht kreisförmig ausgebildet.

Der Querschnitt der Sattelstütze ist in etwa senkrecht zur Längserstreckung der Sattelstütze verlaufend rechteckförmig mit in Fahrtrichtung des Fahrrads und gegen Fahrtrichtung des Fahrrads verlaufenden Verjüngungen ausgebildet.

Es liegt im Rahmen der Erfindung, neben rechteckförmigen Querschnittsformen auch weitere Formen, wie Ovale oder bei Doppel- oder Mehrfachrohranordnungen weitere Querschnittsformen zu verwenden.

Ferner sind auch vorkonfektionierte Akkumulatorpakete als Stromspeicher in der Sattelstütze anordenbar, welche eine einteilige Entnahme des gesamten Stromspeichers aus der Sattelstütze ermöglichen. Hierdurch können derartige Akkumulatorpakete vorgeladen und geladen mitgeführt werden.

## Patentansprüche

1. Vorrichtung zur Unterbringung eines Stromspeichers im oder am Rahmen des Fahrrades, insbesondere eines Renn-, Mountain-, Trekking-, City- oder eines Tourenbikes, **dadurch gekennzeichnet, dass**
der Stromspeicher in der Sattelstütze des Fahrrads untergebracht ist und insbesondere der Querschnitt der Sattelstütze, in etwa senkrecht zur Längserstreckung der Sattelstütze verlaufend und vorzugsweise ein dieser zugeordneter Abschnitt des Rahmens, in welchen die Sattelstütze einschiebbar ist, nicht kreisförmig ausgebildet ist.

2. Vorrichtung nach Anspruch 1, **dadurch gekennzeichnet, dass** der Sattel einen festen Abstand zu dem Stromspeicher aufweist und die Sattelstütze in den entsprechenden Abschnitt des Rahmens einschiebbar ist.

3. Vorrichtung nach Anspruch 2 oder Anspruch 3,
**dadurch gekennzeichnet, dass**
der Stromspeicher ein Lithium-Ionen oder ein Lithium-Polymer-Typ ist.

4. Vorrichtung nach einem der vorstehenden Ansprüche, **dadurch gekennzeichnet, dass**
die Akkumulatoren derart parallel bzw. seriell oder in einer Kombination davon verschaltet sind, so dass die Strom- bzw. Spannungswerte flexibel an die Verbraucher anpassbar sind.

5. Vorrichtung nach einem der vorstehenden Ansprüche, **dadurch gekennzeichnet, dass**
die Entnahme des Stromspeichers nach oben erfolgt.

6. Vorrichtung nach einem der vorstehenden Ansprüche, **dadurch gekennzeichnet, dass**
der Ladezustand des Stromspeichers visuell anzeigbar ist.

7. Vorrichtung nach einem der vorstehenden Ansprüche, **dadurch gekennzeichnet, dass**
der Stromspeicher gegen Umwelteinflüsse geschützt ist, umfassend eine Schutzschicht.

8. Vorrichtung nach einem der vorstehenden Ansprüche, **dadurch gekennzeichnet, dass**
der Stromspeicher so ausgebildet ist, dass die Strom bzw. Spannungswerte einfach am Rahmen abgegriffen werden können.

9. Vorrichtung nach einem der vorstehenden Ansprüche, **dadurch gekennzeichnet, dass**
der Stromspeicher zur Speisung eines Hilfsantriebes eingerichtet ist.

10. Vorrichtung nach einem der vorstehenden Ansprüche, **dadurch gekennzeichnet, dass**
eine Einrichtung vorgesehen ist, mit der der Stromspeicher ohne Entnahme aus der Sattelstange aufgeladen werden kann.

11. Vorrichtung nach einem der vorstehenden Ansprüche, **dadurch gekennzeichnet, dass** der Querschnitt der Sattelstütze, in etwa senkrecht zur Längserstreckung der Sattelstütze verlaufend und vorzugsweise ein dieser zugeordneter Abschnitt des Rahmens, in welchen die Sattelstütze einschiebbar ist, zumindest abschnittweise rechteckförmig ausgebildet ist.

12. Vorrichtung nach einem der vorstehenden Ansprüche, **dadurch gekennzeichnet, dass** der Querschnitt der Sattelstütze, in etwa senkrecht zur Längserstreckung der Sattelstütze verlaufend und vorzugsweise ein dieser zugeordneter Abschnitt des Rahmens, in welchen die Sattelstütze einschiebbar ist, rechteckförmig mit in Fahrtrichtung des Fahrrads und gegen Fahrtrichtung des Fahrrads verlaufenden Verjüngungen ausgebildet ist.

13. Vorrichtung nach einem der vorstehenden Ansprüche, **dadurch gekennzeichnet, dass** der zugeordnete Abschnitt des Rahmens, in welchen die Sattelstütze einschiebbar ist, im Wesentlichen über dessen gesamte Länge nicht rechteckförmig ausgebildet ist.

14. Sattelstütze für ein Fahrrad, insbesondere ein Renn-, Mountain-, Trekking, City oder Tourenbike,
**dadurch gekennzeichnet, dass**
- ein Stromspeicher in der Sattelstütze des Fahrrads untergebracht oder unterbringbar ist und insbesondere der Querschnitt der Sattelstütze, in etwa senkrecht zur Längserstreckung der Sattelstütze verlaufend nicht kreisförmig ausgebildet ist

15. Sattelstütze nach vorstehendem Anspruch,
**dadurch gekennzeichnet, dass** der Querschnitt der Sattelstütze, in etwa senkrecht zur Längserstreckung der Sattelstütze verlaufend rechteckförmig mit in Fahrtrichtung des Fahrrads und gegen Fahrtrichtung des Fahrrads verlaufenden Verjüngungen ausgebildet ist.
